(19) **Europäisches Patentamt**

**European Patent Office**

**Office européen des brevets**

(11) **EP 1 199 231 B1**

(12) **EUROPÄISCHE PATENTSCHRIFT**

(45) Veröffentlichungstag und Bekanntmachung des Hinweises auf die Patenterteilung:
**26.07.2006 Patentblatt 2006/30**

(51) Int Cl.:
***B60S 1/08*** *(2006.01)*

(21) Anmeldenummer: **01124557.8**

(22) Anmeldetag: **13.10.2001**

(54) **Verfahren zur Steuerung einer Scheibenwischanlage**

Method for controlling a windscreen wiper device

Procédé de commande d'un dispositif d'essuie-glace

(84) Benannte Vertragsstaaten:
**DE FR**

(30) Priorität: **21.10.2000 DE 10052342**

(43) Veröffentlichungstag der Anmeldung:
**24.04.2002 Patentblatt 2002/17**

(73) Patentinhaber: **Hella KGaA Hueck & Co.**
**59552 Lippstadt (DE)**

(72) Erfinder:
• **Blaut, Andreas**
**59423 Unna (DE)**
• **Schmitz, Klaus-Peter**
**59558 Lippstadt (DE)**

(56) Entgegenhaltungen:
EP-A- 0 547 337     DE-A- 19 601 781
DE-A- 19 756 429    US-A- 4 987 354
US-A- 5 140 234     US-A- 5 694 012

• **PATENT ABSTRACTS OF JAPAN Bd. 0072, Nr. 17 (M-245), 27. September 1983 (1983-09-27) -& JP 58 112852 A (NITSUSAN SHIYATAI KK), 5. Juli 1983 (1983-07-05)**

**Beschreibung**

Die Erfindung bezieht sich auf ein Verfahren zur Steuerung einer Scheibenwischanlage zur Reinigung der Außenfläche einer Scheibe mit wenigstens einem Wischermotor zum Verschwenken von mindestens einem Wischerblatt und wenigstens einem im Wischbereich auf der Innenseite der Scheibe angeordneten optoelektronischen Sensor, dessen Sensorsignal in Abhängigkeit von einem flüssigen oder festen Belag auf der Scheibe verändert wird. Dabei wird aus den von einer Messwerterfassungseinheit aufgenommenen Sensorsignalen eine Belagsintensitätsgröße ermittelt, die dann zur Ansteuerung des Wischermotors verwendet wird.

Problematisch bei der Ermittlung einer für die Ansteuerung des Wischermotors optimalen Belagsintensitätsgröße sind die Sensorsignale, die beim Überwischen des Wischerblatts über die aktive Sensorfläche erzeugt werden, da das Wischerblatt eine relativ große Wasserwelle vor sich herschiebt, die das Lichtsignal des optoelektronischen Sensors sehr stark schwächt.

Zur Lösung dieses Problems wird in der EP 0 547 337 B1 vorgeschlagen, zur Ermittlung der Belagsintensitätsgröße die Sensorsignale auszuklammern, die während des Überwischens erzeugt wurden. Zu diesem Zweck werden die Überwischzeitpunkte anhand der eingestellten Wischergeschwindigkeit sowie der geometrischen Anordnung des Sensors im Wischbereich vorherberechnet. Darüber hinaus ist dort vorgesehen, die Überwischzeitpunkte über einen separaten dem Wischerblatt zugeordneten Lichtschrankensensor oder einen Hallsensor zu detektieren. Diese Vorgehensweise ist jedoch sehr umständlich und teuer, da bei jedem Fahrzeugtyp eine Abstimmung auf die genaue Anordnung des Sensors im Wischbereich erfolgen muss. Darüber hinaus muss eine Abstimmung auf die Kenndaten (Geschwindigkeitsstufen) des Wischermotors und auf die Geometrie und Anordnung des Wischerarms/Wischerblatts erfolgen. Die Realisierung einer universell einsetzbaren Steuerung ist so nicht möglich. Außerdem ist die Vorausberechung der Überwischzeitpunkte aufgrund unterschiedlicher und sich ändernder Reibwiderstände für das auf der Scheibe gleitende Wischerblatt mit einer Ungenauigkeit behaftet. Das Vorsehen von zusätzlichen Sensoren zur Detektion der Überwischzeiten ist teuer.

Ferner ist in der EP 0 547 337B1 eine Regenformerfassungseinrichtung vorgesehen, welche anhand der Änderungsgeschwindigkeit im Signalverlauf zwischen kleinen und großen Regentropfen unterscheidet. Dabei wird ein Schaltsignal ausgehend von einem definierten Ausgangswert stufenweise oder in einem Schritt in Abhängigkeit von der Signaländerungsgeschwindigkeit herabgesetzt. Wird dabei eine Schaltschwelle unterschritten, dann wird automatisch ein Wischzyklus eingeleitet. Auch hierbei bleiben solche Signale und Signaländerungen unberücksichtigt, die während eines Überwischvorgangs erzeugt wurden, da ansonsten bei einem Überwischvorgang aufgrund der dort auftretenden hohen Signaländerungsgeschwindigkeit immer die Schaltschwelle für große Regentropfen unterschritten bzw. überschritten werden würde.

Aufgabe der Erfindung ist es, ein universell einsetzbares Verfahren zur Steuerung einer Scheibenwischanlage zu schaffen, mit dem eine Ermittlung einer Belagsintensitätsgröße zur Ansteuerung des Wischermotors in zuverlässiger und kostengünstiger Weise möglich ist. Diese Aufgabe wird erfindungsgemäß durch die Merkmale des kennzeichnenden Teils des Anspruchs 1 gelöst.

Beim erfindungsgemäßen Verfahren werden alle Sensorsignale in der Auswertung berücksichtigt, und zwar auch die Sensorsignale, die während eines Überwischvorgangs erzeugt werden. Dabei werden die Sensorsignale kontinuierlich oder in Abtastschritten erfasst, deren zeitlicher Abstand kleiner als die Zeitdauer des Überwischens über die aktive Fläche des Sensors ist. Damit unverhältnismäßig große Signaländerungen, insbesondere bei Überwischvorgängen nicht zu einer fehlerhaften Ansteuerung des Wischermotors führen, werden zur Ermittlung der Belagsintensitätsgröße, die letztendlich zur Ansteuerung des Wischermotors verwendet wird, immer die eigentlichen Sensorsignale und die differenzierten Sensorsignale in Kombination herangezogen, während beim Stand der Technik zur Erzeugung eines Ansteuersignals entweder nur die eigentlichen Sensorsignale oder nur die Signaländerungsgeschwindigkeit herangezogen wird. Durch die Einbeziehung der Sensorsignale, die während des Überwischens erzeugt werden, kann der Sensor im Wischbereich an jeder beliebigen Position angebracht werden. Eine Adaption der Auswertung an die jeweiligen Parameter des Wischermotors und der Wischergeometrie entfällt. Damit können die in Rede stehenden Belagssensoren universell eingesetzt werden. Durch die Kombination der gemessenen Sensorsignale mit den differenzierten Sensorsignalen wird eine realitätsnahe und zuverlässige Belagsintensitätsgröße als Istwert für die Regelung des Wischermotors erreicht. Darüber hinaus hat diese Art der Berechung der Belagsintensität den Vorteil, dass die Zeitbasis für die Berechung größer ist als bei dem Vorgehen gemäß EP 0547 337 B 1. Beim erfindungsgemäßen Verfahren kann die Zeitbasis für die Berechung der Zeitdauer eines kompletten Wischzyklus entsprechen, während die Zeitbasis beim Stand der Technik nur ein Teilbereich davon ist, da um die Überwischzeitpunkte herum Zeitintervalle ausgeklammert sind. Aufgrund der größeren Zeitbasis und der damit verbunden größeren Menge an Messdaten wird schon aus statistischen Gründen die Messgenauigkeit größer.

Durch die Einbeziehung der Überwischvorgänge in die Auswertung wird die Wasserwelle oder zumindest der Anstieg der Wasserwelle, welche das Wischerblatt vor sich herschiebt, bei der Berechung der Belagsintensitätsgröße berücksichtigt. Hierin steckt eine für die Ansteuerung wertvolle Information, da die vom Wischerblatt vor sich hergeschobene Wasserwelle quasi das Integral der Wassermenge des vom Wischblatt überwischten Bereiches ist, während die eigentlichen Sensorsignale die Wassermenge auf der relativ kleinen Sensorfläche jeweils zu Zeiten vor und nach dem Überwischen repräsentieren. Durch die Berücksichtigung der differenzierten Sensorsignale wird dabei gewährleistet, dass das Überwischen mit einer angemessenen Gewichtung in die Berechnung einfließen kann.

Anhand der beigefügten Zeichnungen soll das erfindungsgemäße Verfahren sowie weitere vorteilhafte Ausführungsformen davon nachfolgend näher erläutert werden. Es zeigt:

Figur 1    eine schematische Darstellung der Wischanordnung mit mehreren optoelektronischen Sensoren im Wischbereich sowie der zugehörigen Messwerterfassungs-, Auswerte- und Steuerelektronik,

Figur 2    den Verlauf des Mittelwertes der referenzierten Sensorsignale,

Figur 3    den inversen Verlauf des Mittelwertes der differenzierten Sensorsignale aller Sensoren,

Figur 4    das Integral der gemittelten Sensorsignale aus Fig. 2,

Figur 5    den Verlauf der erfindungsgemäß berechneten Belagsintensitätsgröße.

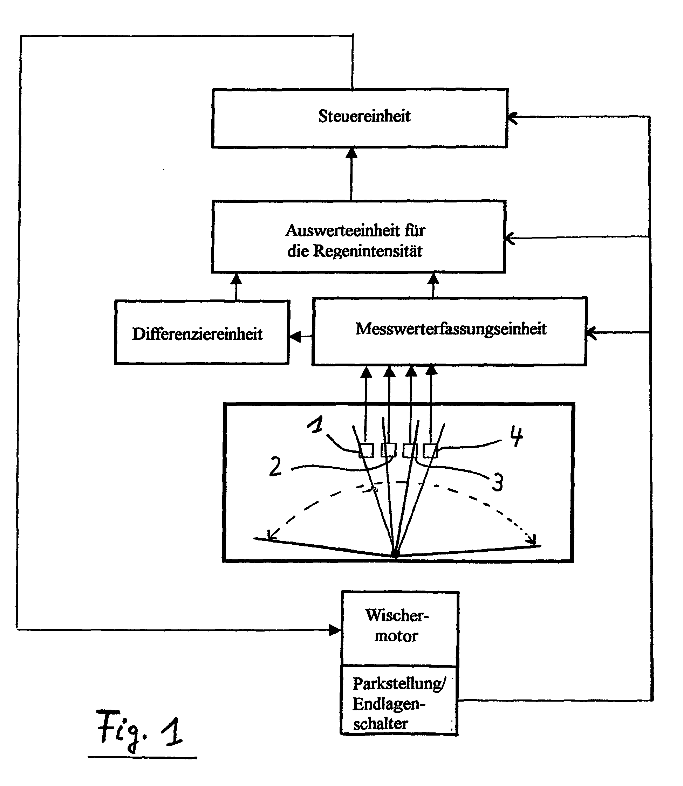

Bei der Wischanordnung wie sie in Figur 1 dargestellt ist, sind 4 optoelektronische Sensoren (1, 2, 3, 4) im Wischbereich vorgesehen, die vom Wischerblatt nacheinander überwischt werden. In der dargestellten Wischanordnung ist ein Wischerblatt vorgesehen. Selbstverständlich kann das erfindungsgemäße Verfahren auch angewendet werden, wenn zwei Wischerblätter vorhanden sind. Die Sensorsignale sind einer Messwerterfassungseinheit (z.b. einem Analog-Digital-Wandler) zugeführt. Die digitalisierten Sensorsignale werden dann an eine Auswerteeinheit weitergeleitet. Außerdem werden die digitalisierten Sensorsignale an eine Differenziereinheit weitergeleitet, wo durch numerische Differenzierung die zeitliche Ableitung der Sensorsignale gebildet wird. Nun werden auch die differenzierten Sensorsignale der Auswerteeinheit zugeführt. Zur Berechnung der Belagsintensitätsgröße (G) werden die Sensorsignale (S1-S4) und die differenzierten Sensorsignale (dS1/dt, dS2/dt, dS3/dt, dS4/dt) in noch zu erläuternder Weise miteinander verknüpft. Die so ermittelte Belagsintensitätsgröße (G) wird dann einer Steuereinheit zugeführt, welche die Belagsintensitätsgröße (G) mit einer oder mehreren Schaltschwellen vergleicht, und ein Schaltsignal zur Ansteuerung des Wischermotors in Abhängigkeit davon generiert, ob die Belagsintensitätsgröße (G) eine oder mehrere Schaltschwellen unter- bzw. überschritten hat. Der Wischermotor verfügt über einen Endlagenschalter, über den angezeigt wird, ob und wann das Wischerblatt sich in der Parkstellung befindet. Der Ausgang des Endlagenschalters ist der Messwerterfassungseinheit, der Auswerteeinheit und/oder der Steuereinheit zur Synchronisation mit dem Wischzyklus zugeführt. Die Messwerterfassungseinheit, die Differenziereinheit, Auswerteeinheit und Steuereinheit sind vorzugsweise in einem einzigen elektronischen Baustein, einem sogenannten ASIC (Application Specific Circuit) integriert. Differenziereinheit, Auswerteeinheit und Steuereinheit umfassen dabei Softwareprogramme zur Differenzierung, Auswertung und Steuerung. Es ist jedoch alternativ auch vorgesehen, die Elektronik aus analogen Bausteinen aufzubauen, insbesondere kann die Differenziereinheit auch als analoge Differenzierschaltung ausgebildet sein.

Der Messzyklus ist gegenüber dem Wischzyklus jeweils zeitversetzt. Im Dauerbetrieb ist die Zeitdauer des jeweils laufenden Messzyklus gleich der eingestellten Zeitdauer für den Wischzyklus, die am Ende des jeweils vorangegangenen Messzyklus berechnet wurde. Im Intervallbetrieb kann die Zeitdauer für einen Messzyklus größer sein als die reine Zeit für einen Wischzyklus (Parkzeiten ausgenommen). Sie wird lediglich durch die Speicherkapazität der Auswerteeinheit begrenzt. Ein typischer Wert für das Abtastintervall, in dem die Sensorsignale aller 4 Sensoren von der Messwerterfassungseinheit aufgenommen werden, ist ca. 20 ms. Bei einer Zeitdauer für einen Messzyklus von größenordnungsmäßig 1s ergeben sich somit ca. 50 Messwerte ($S1_j$ $S2_j$ $S3_j$, $S4_j$) pro Messzyklus. In der Auswerteeinheit ist nun ein Referenzwert (S0) gespeichert, der dem Sensorsignal einer trockenen oder weitestgehend trockenen Scheibe entsprechen soll. In der Auswerteeinheit wird nun für jeden Sensor die Differenz ($D1_j$, $D2_j$, $D3_j$, $D4_j$) zwischen dem Referenzwert (S0) und dem Sensorsignal ($S1_j$ $S2_j$ $S3_j$, $S4_j$) gebildet. Dabei kann der Referenzwert in bekannter Weise in bestimmten Zeitabständen (z.B. nach jedem Messzyklus) neu angepasst. In vorteilhafter Weise existiert für jeden Sensor ein eigener Referenzwert. Die Differenzen der einzelnen Sensoren werden dann aufaddiert zu einem Differenzwert $D_j = (D1_j+D2_j+D3_j+D4_j)/4$. Der Verlauf dieses Differenzwertes (Mittelwert der referenzierten Sensorsignale) ist in Figur 2 aufgezeichnet. Die durchgezogenen Linie in Figur 3 stellt den Verlauf des Mittelwertes der differenzierten Sensorsignale aller 4 Sensoren dar:

(dS/dt)j = { (dS1/dt)j + (dS2/dt)j+ (dS3/dt)j + (dS4/dt)j }/4 - dargestellt ist der inverse Verlauf - (dS/dt)j.

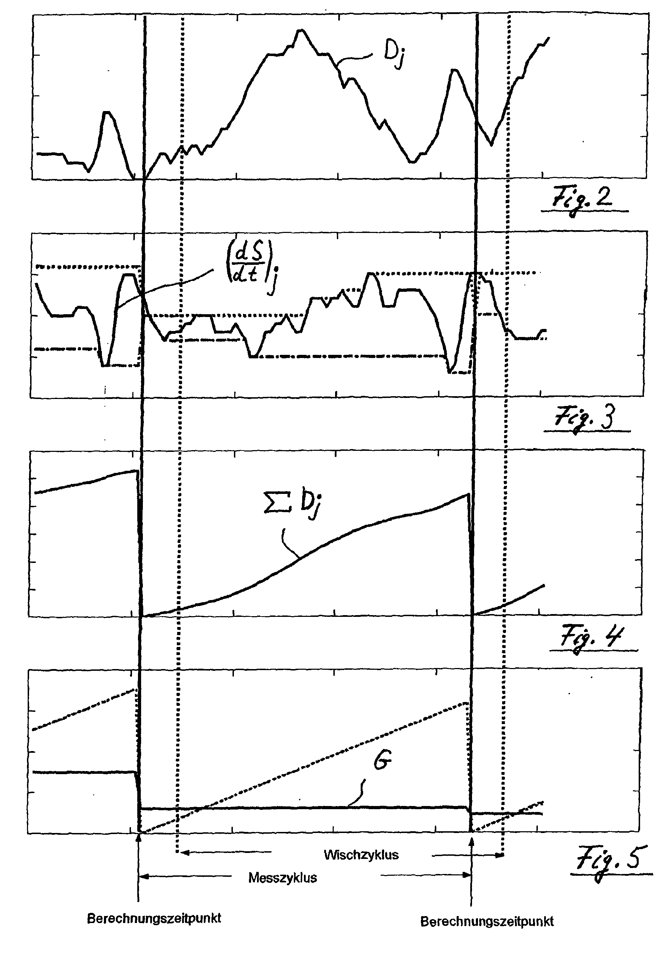

Die punktierte Linie in Figur 3 kennzeichnet den Verlauf der bis zum jeweiligen Auswertezeitpunkt größten positiven Signaländerungsgeschwindigkeit, während die strichpunktierte Linie den Verlauf der bis zum jeweiligen Auswertezeitpunkt größten negativen Signaländerungsgeschwindigkeit kennzeichnet. Am Ende eines Mess- und Auswertezyklus wird so ein Maximalwert (größte positive Signaländerungsgeschwindigkeit im Messzyklus - $(dS/dt)_{Max.}$ und ein Minimalwert (größte negative Signaländerungsgeschwindigkeit im Messzyklus - $(dS/dt)_{Min.}$ ermittelt. Figur 4 zeigt den Verlauf der addierten referenzierten Mittelwerte ($D_j$). Die gestrichelte Linie in Figur 5 zeigt die Zunahme der Abtastpunkte in einem Messzyklus. Die durchgezogene Linie zeigt den Verlauf der jeweils am Ende eines Messzyklus berechneten Belagsintensitätsgröße (G), die zur Ansteuerung des Wischermotors für den jeweils nächsten Wischzyklus dient. Die Belagsintensitätsgröße (G) wird nun in vorteilhafter Weise wie folgt berechnet:

$$G = 1/N \sum D_j + a \, (dS/dt)_{Max.} + b \, (dS/dt)_{Min.}$$

Dabei steht N für die Zahl der Abtastpunkte.

In die Berechnung der Belagsintensitätsgröße (G) fließen somit folgende Größen ein:

- die Summe der referenzierten Mittelwerte innerhalb eines Messzyklus dividiert durch die Zahl der Abtastpunkte, d.h. der über den Messzyklus gemittelte Mittelwert aller Sensoren,
- das Maximum der differenzierten Sensorsignale innerhalb des Messzyklus,
- das Minimum der differenzierten Sensorsignale innerhalb des Messzyklus, wobei die Größe $(dS/dt)_{Min.}$ negativ ist.

Über die Faktoren a und b kann der Einfluß des Maximums und des Minimums der differenzierten Sensorsignale auf die Belagsintensitätsgröße (G) und damit letztendlich auf die Ansteuerung optimal eingestellt werden. Die Faktoren a und b werden empirisch durch Versuche ermittelt, in denen man die Werte dieser Faktoren ändert und die Auswirkungen auf die Ansteuerung beobachtet. Es wird dann das Wertepaar (a,b) verwendet, das die beste Ansteuerung bewirkt hat. Die Faktoren a und b sind in der Auswerteeinheit gespeichert. Dabei ist es vorteilhafter Weise vorgesehen, die Werte dieser Faktoren auch nachträglich dann, wenn die Sensorik samt Steuerelektronik bereits im Fahrzeug eingebaut ist, zu ändern bzw. neue Werte zu speichern.

Obwohl die vorstehend gemachten Ausführungen sich auf eine Sensoranordnung mit 4 Sensoren beziehen, ist das erfindungsgemäße Verfahren zur Ermittlung der Belagsintensitätsgröße (G) natürlich auch bei nur einem Sensor anwendbar.

Die erfindungsgemäß ermittelte Belagsintensitätsgröße (G) kann als Schaltkriterium für das Umschalten des Wischermotors von Intervallbetrieb auf Dauerbetrieb und/oder

als Schaltkriterium für das Umschalten der Geschwindigkeit des Wischermotors im Dauerbetrieb verwendet werden.

Für den Fall, dass zwei oder mehrere Sensoren, wie im vorliegenden Beispiel, vorgesehen sind, ist das Verfahren in vorteilhafter Weise zu Erkennung eines Wasserschwalls weiter ausgestaltet. Dabei werden die Sensorsignale $(S_j)$ bzw. die referenzierten Sensorsignale $(S0-S_j)$ der einzelnen Sensoren mit einem Schwellwert verglichen; gleiches geschieht mit den differenzierten Sensorsignalen der einzelnen Sensoren. Dabei wird immer dann, wenn innerhalb einer bestimmten Zeitdauer (quasi zeitgleich), die Sensorsignale und die differenzierten Sensorsignale von mindestens 2 Sensoren den jeweiligen Schwellwert überschreiten bzw. unterschreiten, automatisch und unverzüglich ein Wischvorgang ausgelöst oder die Wischgeschwindigkeit erhöht. Der Ablauf des normalen Messzyklus wird dabei nicht abgewartet. Dadurch, dass zwei räumlich zumindest in einem gewissen Abstand zueinander angeordnete Sensoren ausgewertet werden, kann mit sehr hoher Wahrscheinlichkeit davon ausgegangen werden, dass ein Wasserschwall die Scheibe getroffen hat. Die "ortsaufgelöste" Messung unter Einbeziehung der differenzierten Sensorsignale ermöglicht somit eine zuverlässige Schwallerkennung, worauf dann durch Einleitung eines Wischvorgangs oder durch Erhöhung der Wischgeschwindigkeit automatisch reagiert wird, um das Wasser wegzuwischen.

## Patentansprüche

1.  Verfahren zur Steuerung einer Scheibenwischanlage zur Reinigung der Außenfläche einer Scheibe mit wenigstens einem Wischermotor zum Verschwenken von mindestens einem Wischblatt und wenigstens einem im Wischbereich auf der Innenseite der Scheibe angeordneten optoelektronischen Sensor (1,2,3,4), dessen Sensorsignal (S1,S2,S3,S4) in Abhängigkeit von einem flüssigen oder festen Belag auf der Scheibe verändert wird, wobei

    - die Sensorsignale von einer Messwerteerfassungseinheit aufgenommenen werden,
    - die aufgenommenen Sensorsignale (S1,S2,S3,S4) einer Differenziereinheit zur Bildung von zeitlich differenzierten Sensorsignalen zugeführt werden,
    - zur Ansteuerung des Wischermotors die eigentlichen Sensorsignale und die differenzierten Sensorsignale verwendet werden,

    **dadurch gekennzeichnet, dass**

    - aus den eigentlichen Sensorsignalen und aus den differenzierten Sensorsignalen eine Belagsintensitätsgröße (G) ermittelt wird,

- die so ermittelte Belagsintensitätsgröße (G) einer Steuereinheit zugeführt wird, welche die Belagsintensitätsgröße (G) mit einer oder mehreren Schaltschwellen vergleicht, und ein Schaltsignal zur Ansteuerung des Wischermotors in Abhängigkeit davon generiert, ob die Belagsintensitätsgröße (G) eine oder mehrere Schaltschwellen unter- bzw. überschritten hat.

2. Verfahren nach Anspruch 1,
**dadurch gekennzeichnet, dass**
die Differenziereinheit in Form eines Auswerteprogramms ausgebildet ist, das eine numerische Differenzierung der Sensorsignale durchführt.

3. Verfahren nach Anspruch 1,
**dadurch gekennzeichnet, dass**
die Differenziereinheit eine Differenzierschaltung ist.

4. Verfahren nach einem der vorstehenden Ansprüche,
**dadurch gekennzeichnet, dass**
innerhalb eines Auswertezeitraums der Maximalwert und/oder der Minimalwert der differenzierten Sensorsignale ermittelt wird, wobei der Maximalwert und/oder der Minimalwert zur Berechnung der Belagsintensitätsgröße (G) herangezogen wird.

5. Verfahren nach Anspruch 4,
**dadurch gekennzeichnet, dass**
der Maximalwert und/oder der Minimalwert mit einem Gewichtungsfaktor (a,b) in die Berechnung der Belagsintensitätsgröße (G) einfließt.

6. Verfahren nach einem der vorstehenden Ansprüche,
**dadurch gekennzeichnet, dass**
die Belagsintensitätsgröße (G) als Schaltkriterium für das Umschalten des Wischermotors von Intervallbetrieb auf Dauerbetrieb verwendet wird.

7. Verfahren nach einem der vorstehenden Ansprüche,
**dadurch gekennzeichnet, dass**
die Belagsintensitätsgröße (G) Schaltkriterium für das Umschalten der Geschwindigkeit des Wischermotors im Dauerbetrieb verwendet wird.

8. Verfahren nach einem der vorstehenden Ansprüche,
**dadurch gekennzeichnet, dass**
aus den Sensorsignalen, die in einem Messzyklus aufgenommen wurden, ein Mittelwert gebildet wird, und zu diesem Mittelwert der gewichtete Maximalwert und/oder Minimalwert der differenzierten Sensorsignale aus diesem Messzyklus addiert wird, um die Belagsintensitätsgröße (G) zu erhalten.

9. Verfahren nach Anspruch 8,
**dadurch gekennzeichnet, dass**
jeweils ein Differenzwert zwischen einem Referenzwert und dem jeweils gemessenen Sensorsignal gebildet wird, wobei aus den in einem Messzyklus ermittelten Differenzwerten der Mittelwert berechnet wird.

10. Verfahren nach Anspruch 7 bis 9,
**dadurch gekennzeichnet, dass**
der Mess- und Auswertezyklus gegenüber dem Wischzyklus zeitversetzt ist, wobei die Zeitdauer eines Mess- und Auswertezyklus gleich der Zeitdauer des jeweils vorangehenden Wischzyklus ist.

11. Verfahren nach einem der vorstehenden Ansprüche, wobei zwei oder mehrere Sensoren vorgesehen sind, deren aktive Fläche zeitversetzt vom Wischblatt überwischt wird,
**dadurch gekennzeichnet, dass**
die Sensorsignale der einzelnen Sensoren laufend jeweils mit einem Schwellwert verglichen werden, dass die differenzierten Sensorsignale der einzelnen Sensoren laufend jeweils mit einem weiteren Schwellwert verglichen werden, wobei immer dann, wenn innerhalb einer vorgegebenen Zeitdauer, die Sensorsignale und die differenzierten Sensorsignale von mindestens zwei Sensoren den jeweiligen Schwellwert überschritten oder unterschritten haben, automatisch unverzüglich ein Wischvorgang ausgelöst wird oder die Wischgeschwindigkeit erhöht wird.

**Claims**

1. Method for controlling a windscreen wiper device for cleaning the outer surface of a windscreen, having at least one wiper motor for pivoting at least one wiper blade and, arranged in the wiping region on the inside of the windscreen, at least one opto-electronic sensor (1, 2, 3, 4) whose sensor signal (S1, S2, S3, S4) varies dependent upon a liquid or solid deposit on the windscreen, wherein

   - the sensor signals are received by a measurement value recording unit,
   - the received sensor signals (S1, S2, S3, S4) are passed to a differentiating unit in order to form sensor signals differentiated with respect to time,
   - in order to control the wiper motor, the actual sensor signals and the differentiated sensor signals are used,

   **characterised in that**

   - a deposit intensity variable (G) is determined from the actual sensor signals and the differentiated sensor signals,
   - the deposit intensity variable (G) thereby determined is passed to a control unit which compares the deposit intensity variable (G) with one or more switching threshold values, and generates a switching signal in order to control the wiper motor dependent upon whether the deposit intensity variable (G) has undershot or overshot one or more switching threshold values.

2. Method according to claim 1, **characterised in that** the differentiating unit is designed in the form of an evaluating program which carries out numerical differentiation of the sensor signals.

3. Method according to claim 1, **characterised in that** the differentiating unit is a differentiating circuit.

4. Method according to one of the preceding claims, **characterised in that** the maximum and/or minimum value of the differentiated sensor signals is determined within an evaluation period, whereby the maximum value and/or the minimum value is used for calculating the deposit intensity variable (G) .

5. Method according to claim 4, **characterised in that** the maximum value and/or the minimum value is included with a weighting factor (a, b) in the calculation of the deposit intensity variable (G).

6. Method according to one of the preceding claims, **characterised in that** the deposit intensity variable (G) is used as a switching criterion for the switching of the wiper motor from interval operation to continuous operation.

7. Method according to one of the preceding claims, **characterised in that** the deposit intensity variable (G) is used as a switching criterion for the switching of the speed of the wiper motor during continuous operation.

8. Method according to one of the preceding claims, **characterised in that** a mean is formed from the sensor signals received during one measuring cycle and the weighted maximum value and/or minimum value of the differentiated sensor signals from this measuring cycle is added to this mean value in order to obtain the deposit intensity variable (G).

9. Method according to claim 8, **characterised in that** a difference value between a reference value and the respective measured sensor signal is formed, whereby the mean value is calculated from the difference values determined during one measuring cycle.

10. Method according to claims 7 to 9, **characterised in that** the measuring and evaluating cycle is temporally offset relative to the wiping cycle, wherein the duration of a measuring and evaluating cycle is equal to the duration of the respective previous wiping cycle.

11. Method according to one of the preceding claims, wherein two or more sensors are provided whose active surface is wiped over in temporally offset manner by the wiper blade, **characterised in that** the sensor signals from the individual sensors are continuously compared with a threshold value, that the differentiated sensor signals from the individual sensors are each continuously compared with a further threshold value, whereby whenever, within a predetermined duration, the sensor signals and the differentiated sensor signals from at least two sensors have overshot or undershot the respective threshold value, a wiping procedure is automatically and immediately triggered or the wiping speed is increased.

## Revendications

1. Procédé de commande d'un dispositif d'essuie-glace pour nettoyer la surface externe d'un pare-brise comportant au moins un moteur d'essuie-glace pour l'oscillation d'au moins une raclette d'essuie-glace et au moins d'un capteur optoélectronique (1, 2, 3, 4) disposé dans la zone balayée par l'essuie-glace sur le côté intérieur du pare-brise, dont le signal de capteur (S1, S2, S3, S4) est modifié selon une couche liquide ou solide sur le pare-brise, dans lequel

   - les signaux de capteur sont délivrés par une unité de détection de valeurs mesurées,
   - les signaux de capteur délivrés (S1, S2, S3, S4) sont envoyés à une unité de différenciation pour la formation des signaux de capteur différenciés dans le temps,
   - les signaux de capteur proprement dits et les signaux de capteur différenciés sont utilisés pour la commande du moteur d'essuie-glace,

   **caractérisé en ce que**

   - une grandeur d'intensité de couche (G) est déterminée à partir des signaux de capteur proprement dits et des signaux de capteur différenciés,
   - la grandeur d'intensité de couche (G) ainsi déterminée est envoyée à une unité de commande, qui compare la grandeur d'intensité de couche (G) à un ou plusieurs seuils de commutation, et génère un signal de commutation en vue de la commande du moteur d'essuie-glace selon si la grandeur d'intensité de couche (G) se trouve en dessous ou au-dessus d'un ou plusieurs seuils de commutation.

2. Procédé selon la revendication 1, **caractérisé en ce que** l'unité de différenciation est réalisée sous la forme d'un programme d'évaluation, qui effectue une différenciation numérique des signaux de capteur.

3. Procédé selon la revendication 1, **caractérisé en ce que** l'unité de différenciation est un circuit de différenciation.

4. Procédé selon l'une des revendications précédentes, **caractérisé en ce que**, à l'intérieur d'une période d'évaluation, la valeur maximale et/ou la valeur minimale des signaux de capteur différenciés est déterminée, où la valeur maximale et/la valeur minimale est utilisée pour le calcul de la grandeur d'intensité de couche (G).

5. Procédé selon la revendication 4, **caractérisé en ce que** la valeur maximale et/la valeur minimale influence avec un facteur de pondération (a, b) le calcul de la grandeur d'intensité de couche (G).

6. Procédé selon l'une des revendications précédentes, **caractérisé en ce que** la grandeur d'intensité de couche (G) est utilisée comme critère de commutation pour la commutation du moteur d'essuie-glace du fonctionnement intermittent au fonctionnement continu.

7. Procédé selon l'une des revendications précédentes, **caractérisé en ce que** la grandeur d'intensité de couche (G) est utilisée comme critère de commutation pour la commutation de la vitesse du moteur d'essuie-glace pendant le fonctionnement continu.

8. Procédé selon l'une des revendications précédentes, **caractérisé en ce qu'**une moyenne est formée à partir des signaux de capteur, qui sont délivrés dans un cycle de mesure, et la valeur maximale et/la valeur minimale pondérée des signaux de capteur différenciés provenant de ce cycle de mesure est additionnée à cette moyenne, pour obtenir la grandeur d'intensité de couche (G).

9. Procédé selon la revendication 8, **caractérisé en ce qu'**une valeur de différence respective est formée entre une valeur de référence et le signal de capteur mesuré respectif, où la moyenne est calculée à partir des valeurs de différence déterminées dans un cycle de mesure.

10. Procédé selon la revendication 7 à 9, **caractérisé en ce que** le cycle de mesure et d'évaluation est en décalage par rapport au cycle d'essuyage, où la durée d'un cycle de mesure et d'évaluation est égale à la durée du cycle d'essuyage précédent respectif.

11. Procédé selon l'une des revendications précédentes, dans lequel deux ou plusieurs capteurs sont prévus, dont la surface active est essuyée par la raclette d'essuie-glace de façon décalée, **caractérisé en ce que** les signaux de capteur des capteurs individuels sont comparés régulièrement à une valeur de seuil respective, que les signaux de capteur différenciés des capteurs individuels sont comparés régulièrement à une autre valeur de seuil respective, dans lequel, lorsqu'à l'intérieur d'une période de temps prédéterminée, les signaux de capteur et les signaux de capteur différenciés d'au moins deux capteurs se trouvent en dessous ou au-dessus de la valeur de seuil respective, un processus d'essuyage est déclenché automatiquement immédiatement ou la vitesse d'essuyage est augmentée.

Steuereinheit

Auswerteeinheit für
die Regenintensität

Differenziereinheit

Messwerterfassungseinheit

1

2

4

3

Wischermotor

Parkstellung/
Endlagenschalter

*Fig. 1*

$D_j$

*Fig. 2*

$\left(\dfrac{dS}{dt}\right)_j$

*Fig. 3*

$\Sigma D_j$

*Fig. 4*

$G$

Wischzyklus

Messzyklus

*Fig. 5*

Berechnungszeitpunkt                    Berechnungszeitpunkt